# EUROPEAN PATENT APPLICATION

(11) **EP 3 358 904 A1**
(43) Date of publication of application: **08.08.2018**
(21) Application number: 16850162.5
(22) Date of filing: 30.06.2016
(51) Int. Cl.: H04W 76/02

(54) **METHOD FOR ESTABLISHING AUXILIARY SIGNALING LINK, AND DEVICE, BASE STATION AND TERMINAL THEREFOR**

(30) Priority: 29.09.2015 CN 201510632655
(71) Applicant: China Academy of Telecommunications Technology, Hai Dian District Beijing 100191 (CN)
(72) Inventor: ZHANG, Dajun, Beijing 100191 (CN)
(74) Representative: Maiwald Patent- und Rechtsanwaltsgesellschaft mbH
(86) International application number: PCT/CN2016/087904
(87) International publication number: WO 2017/054538

(57) **Abstract**

A method and a device for establishing an auxiliary signaling link, a base station and a user equipment are provided. The user equipment is allowed to establish an auxiliary signaling link on a plurality of radio access systems. Thus, for a signaling bearer having an auxiliary link, a RRC signaling message thereon is allowed to be transmitted to the user equipment on a plurality of master/secondary links simultaneously.

## Description

### CROSS-REFERENCE TO RELATED APPLICATION

The present application claims a priority of the Chinese patent application No. 201510632655.5 filed in China on September 29, 2015, the disclosure of which is incorporated herein by reference in its entirety.

### TECHNICAL FIELD

The present disclosure relates to a field of wireless communication technology, and more particularly, relates to a method for establishing an auxiliary signaling link, a device for establishing an auxiliary signaling link, a base station and a user equipment.

### BACKGROUND

With continuous evolution of networks, a traditional network architecture containing collaboration/aggregation among separated radio access systems is no longer suitable for requirements of future developments. With a mixed deployment between a 5th Generation (5G) mobile communication network or other radio access systems and a 4th Generation (4G) mobile communication network, fusion of two or more different radio access systems may bring further growth to a performance of an entirety of fused radio access systems.

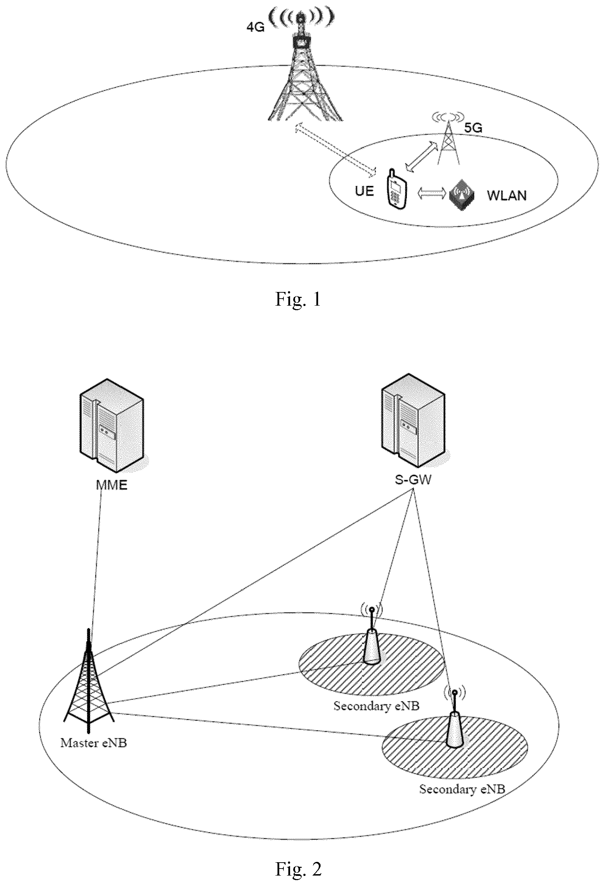

Fig. 1 shows a scenario of dual connections in an environment covered by multiple radio access systems. In Fig. 1, a non-ideal data/signaling interface, i.e., an interface X2, is employed between a master base station (Master eNB, abbreviated to MeNB) and a secondary base station (Secondary eNB, abbrebiated to SeNB), and a user equipment (UE) may works with the MeNB and the SeNB simultaneously. When the UE connected to the MeNB enters a coverage area of a cell corresponding to the SeNB, the MeNB may transfer a part or all of data of the UE to the SeNB according to considerations such as signal intensities or load-balances, so that the UE may acquire a service provided by the SeNB, and use resources of the MeNB and the SeNB simultaneously and an aggregation between the base stations (inter-eNB aggregation). In such a scenario, a plurality of Data Radio Bearers (DRB) of the UE may be borne by a cell in a Secondary Cell Group (SCG) and a cell in a Master Cell Group (MCG), respectively.

Fig. 2 shows a fusion scenario of different radio access systems (a 4G cell and a 5G cell/a Wireless Local Area Network (WLAN)). In Fig. 2, through the fusion of the 4G cell and the 5G/WLAN cell, the UE may work with the 4G cell (the master base station) and the 5G/WLAN cell (the secondary base station) simultaneously, i.e., the UE may receive a Radio Resource Control (RRC) signaling from the master base station (the 4G cell) and receive data from the 4G cell and the 5G/WLAN cell, and thus a transmission rate of an overall system may be increased.

According to the related art, in the above scenario in which the plurality of radio access systems are fused, only one signaling connection is provided for the UE, and a plurality of simultaneous signaling connections are not provided for the UE (especially when the plurality of radio access systems coexist), and therefore a transmission reliability of control signaling is difficult to be increased.

### SUMMARY

A technical problem to be solved by the present disclosure is to provide a method and a device for establishing an auxiliary signaling link, a base station and a user equipment, to establish the auxiliary signaling link for the user equipment and increase a reliability of signaling transmission.

To solved the above technical problem, the present disclosure provides a method for establishing an auxiliary signaling link which includes: determining, by a first base station, whether the auxiliary signaling link directed to a second base station needs to be established for a user equipment or not, wherein the first base station is a master base station of the user equipment; in case that the auxiliary signaling link needs to be established, sending, by the first base station, a request message for requesting establishment of the auxiliary signaling link to the second base station, wherein the request message carries a signaling bearing identifier of the auxiliary signaling link requested to be established; receiving, by the first base station, a response message returned by the second base station in response to the request message, wherein the response message carries radio resource configuration information of the auxiliary signaling link; and sending, by the first base station, the radio resource configuration information of the auxiliary signaling link to the user equipment, such that the user equipment establishes the auxiliary signaling link directed to the second base station.

In the above technical solution, determining, by the first base station, whether the auxiliary signaling link directed to the second base station needs to be established for the user equipment or not, includes: determining, by the first base station, whether the auxiliary signaling link needs to be established for the user equipment or not, according to a received measurement report of the user equipment and/or radio resource management information; and in case that the auxiliary signaling link needs to be established, selecting the second base station corresponding to the auxiliary signaling link.

In the above solution, sending, by the first base station, the radio resource configuration information of the auxiliary signaling link to the user equipment, includes: sending, by the first base station, the radio resource configuration information of the auxiliary signaling link to the user equipment by carrying the radio resource configuration information of the auxiliary signaling link in a radio resource control RRC reconfiguration signaling.

In another aspect, the present disclosure provides a method for establishing an auxiliary signaling link, which includes: receiving, by a second base station, a request message sent by a first base station and used for requesting establishment of the auxiliary signaling link directed to the second base station for a user equipment, wherein the first base station is a master base station of the user equipment, and the request message carries an identifier of a signaling bearer of the auxiliary signaling link requested to be established; in case that second base station agrees to establish the auxiliary signaling link, allocating, by the second base station, corresponding radio resources to the auxiliary signaling link, and returning a response message carrying radio resource configuration information of the auxiliary signaling link to the first base station; and establishing, by the second base station, the auxiliary signaling link in response to a synchronization process of radio parameter configuration initiated by the user equipment, wherein the synchronization process is initiated by the user equipment according to the radio resource configuration information of the auxiliary signaling link forwarded by the first base station.

In another aspect, the present disclosure provides a method for establishing an auxiliary signaling link, which includes: receiving, by a user equipment, radio resource configuration information of an auxiliary signaling link directed to a second base station sent by a first base station, wherein the first base station is a master base station of the user equipment, and the second base station is a base station selected by the first base station in case that the auxiliary signaling link needs to be established for the user equipment; and initiating, by the user equipment, a node synchronization process to the second base station according to the radio resource configuration information of the auxiliary signaling link to establish the auxiliary signaling link directed to the second base station.

In the above technical solution, the second base station and the first base station belong to different radio access systems, respectively.

In yet another aspect, the present disclosure provides a device for establishing an auxiliary signaling link, and the device is applied to a first base station and includes: a determination unit, configured for determining whether the auxiliary signaling link directed to a second base station needs to be established for a user equipment or not, wherein the first base station is a master base station of the user equipment; a first sending unit, configured for, in case that the auxiliary signaling link needs to be established, sending a request message for requesting establishment of the auxiliary signaling link to the second base station, wherein the request message carries a signaling carrier identifier of the auxiliary signaling link requested to be established; a first receiving unit, configured for receiving a response message returned by the second base station in response to the request message, wherein the response message carries radio resource configuration information of the auxiliary signaling link; and a second sending unit, configured for sending the radio resource configuration information of the auxiliary signaling link to the user equipment, such that the user equipment establishes the auxiliary signaling link directed to the second base station.

In the above technical solution, the determination unit is further configured for: determining whether the auxiliary signaling link needs to be established for the user equipment or not according to a received measurement report of the user equipment and/or radio resource management information, and in case that the auxiliary signaling link needs to be established, selecting the second base station corresponding to the auxiliary signaling link.

In the above technical solution, the second sending unit is specifically configured for: sending the radio resource configuration information of the auxiliary signaling link to the user equipment by carrying the radio resource configuration information of the auxiliary signaling link in a radio resource control RRC reconfiguration signaling.

In yet another aspect, the present disclosure provides a first base station, which includes: a processor; and a memory connected to the processor via a bus interface, and configured to store programs and data used by the processor when executing operations, wherein when the processor invokes and executes the programs and data stored in the memory, the processor executes: determining whether an auxiliary signaling link directed to a second base station needs to be established for a user equipment or not, wherein the first base station is a master base station of the user equipment; in case that the auxiliary signaling link needs to be established, sending, to the second base station, a request message for requesting establishment of the auxiliary signaling link, wherein the request message carries an identifier of a signaling bearer of the auxiliary signaling link requested to be established; receiving a response message returned by the second base station in response to the request message, wherein the response message carries radio resource configuration information of the auxiliary signaling link; and sending the radio resource configuration information of the auxiliary signaling link to the user equipment, such that the user equipment establishes the auxiliary signaling link directed to the second base station.

According yet another aspect, the present disclosure provides a device for establishing an auxiliary signaling link, and the device is applied to a second base station and includes: a receiving unit, configured for receiving a request message sent by a first base station and used for requesting establishment of the auxiliary signaling link directed to the second base station for a user equipment, wherein the first base station is a master base station of the user equipment, and the request message carries an identifier of a signaling bearer of the auxiliary signaling link requested to be established; a sending unit, configured for, in case that the second base station agrees to establish the auxiliary signaling link, allocating corresponding radio resources to the auxiliary signaling link, and returning a response message carrying radio resource configuration information of the auxiliary signaling link to the first base station; and a synchronization unit, configured for establishing the auxiliary signaling link in response to a synchronization process of radio parameter configuration initiated by the user equipment, wherein the synchronization process is initiated by the user equipment according to the radio resource configuration information of the auxiliary signaling link forwarded by the first base station.

According to yet another aspect, the present disclosure provides a second base station, which includes: a processor; and a memory connected to the processor via a bus interface and configured to store programs and data used by the processor when executing operations, wherein when the processor invokes and executes the programs and data stored in the memory, the processor executes: receiving a request message sent by a first base station and used for requesting establishment of an auxiliary signaling link directed to a second base station for a user equipment, wherein the first base station is a master base station of the user equipment, and the request message carries an identifier of a signaling bearer of the auxiliary signaling link requested to be established; in case that the second base station agrees to establish the auxiliary signaling link, allocating corresponding radio resources to the auxiliary signaling link, and returning a response message carrying radio resource configuration information of the auxiliary signaling link to the first base station; and establishing the auxiliary signaling link in response to a synchronization process of radio parameter configuration initiated by the user equipment, wherein the synchronization process is initiated by the user equipment according to the radio resource configuration information of the auxiliary signaling link forwarded by the first base station.

According to yet another aspect, the present disclosure provides a device for establishing an auxiliary signaling link, and the device is applied to a user equipment and includes: a receiving unit, configured for receiving radio resource configuration information of an auxiliary signaling link directed to a second base station sent by a first base station, wherein the first base station is a master base station of the user equipment, and the second base station is a base station selected by the first base station in case that the auxiliary signaling link needs to be established for the user equipment; and a synchronization unit, configured for initiating a node synchronization process to the second base station according to the radio resource configuration information of the auxiliary signaling link to establish the auxiliary signaling link directed to the second base station.

According to yet another aspect, the present disclosure provides a user equipment, which includes: a processor; and a memory connected to the processor via a bus interface and configured to store programs and data used by the processor when executing operations, wherein when the processor invokes and executes the programs and data stored in the memory, the processor executes: receiving radio resource configuration information of an auxiliary signaling link directed to a second base station sent by a first base station, wherein the first base station is a master base station of the user equipment, and the second base station is a base station selected by the first base station in case that the auxiliary signaling link needs to be established for the user equipment; and initiating a node synchronization process to the second base station according to the radio resource configuration information of the auxiliary signaling link to establish the auxiliary signaling link directed to the second base station.

In still another aspect, the present disclosure provides a method for establishing an auxiliary signaling link, which includes: receiving, by a second base station, an access message for requesting establishment of the auxiliary signaling link directed to the second base station sent by a user equipment, wherein the access message carries a signaling link identifier between the user equipment and a first base station, and the first base station is a master base station of the user equipment; in case that the second base station agrees to establish the auxiliary signaling link, allocating, by the second base station, corresponding radio resources to the auxiliary signaling link, and sending, to the first base station, a request message for requesting establishment of the auxiliary signaling link according to the signaling link identifier, wherein the request message carries an identifier of a signaling bearer of the auxiliary signaling link and radio resource configuration information of the auxiliary signaling link; receiving, by the second base station, a response message returned by the first base station in response to the request message; and sending, by the second base station, the radio resource configuration information of the auxiliary signaling link to the user equipment, such that the user equipment establishes the auxiliary signaling link directed to the second base station.

According to still another aspect, the present disclosure provides a method for establishing an auxiliary signaling link, which includes: in case that a new auxiliary signaling link needs to be established, determining, by a user equipment, a second base station corresponding to the auxiliary signaling link, and sending, to the second base station, an access message for requesting establishment of the auxiliary signaling link directed to the second base station, wherein the access message carries a signaling link identifier between the user equipment and a first base station, and the first base station is a master base station of the user equipment; receiving, by the user equipment, radio resource configuration information of the auxiliary signaling link sent by the second base station after the second bae station allocates corresponding radio resources to the auxiliary signaling link, wherein the radio resource configuration information of the auxiliary signaling link is sent after the second base station sent, to the first base station, a request message for requesting establishment of the auxiliary signaling link and received a response message returned by the first base station; and configuring, by the user equipment, a layer-2 link parameter according to the radio resource configuration information of the auxiliary signaling link and initiating a node synchronization process to the second base station to establish the auxiliary signaling link directed to the second base station.

In the above technical solution, the user equipment further determines whether the new auxiliary signaling link needs to be established or not according to a measurement report of radio access networks and/or received radio resource management information.

According still another aspect, the present disclosure provides a method for establishing an auxiliary signaling link, which includes: receiving, by a first base station, a request message sent by a second base station and used for requesting establishment of the auxiliary signaling link directed to the second base station for a user equipment, wherein the first base station is a master base station of the user equipment, the request message is sent by the second base station after the second base station allocates corresponding radio resources to the auxiliary signaling link, and carries an identifier of a signaling bearer of the auxiliary signaling link and radio resource configuration information of the auxiliary signaling link; and updating, by the first base station, radio configuration information of the user equipment saved by the first base station according to the request message, and sending a response message to the second base station.

In the above technical solution, the second base station and the first base station belong to different radio access systems, respectively.

In still yet another aspect, the present disclosure provides a device for establishing an auxiliary signaling link, and the device is applied to a second base station and includes: a first receiving unit, configured for receiving an access message sent by a user equipment and used for requesting establishment of the auxiliary signaling link directed to the second base station, wherein the access message carries a signaling link identifier between the user equipment and a first base station, and the first base station is a master base station of the user equipment; a first sending unit, configured for, in case that the second base station agrees to establish the auxiliary signaling link, allocating corresponding radio resources to the auxiliary signaling link, and sending, to the first base station, a request message for requesting establishment of the auxiliary signaling link according to the signaling link identifier, wherein the request message carries an identifier of a signaling bearer of the auxiliary signaling link and radio resource configuration information of the auxiliary signaling link; a second receiving unit, configured for receiving a response message returned by the first base station in response to the request message; and a second sending unit, configured for sending radio resource configuration information of the auxiliary signaling link to the user equipment, such that the user equipment establishes the auxiliary signaling link directed to the second base station.

According to still yet another aspect, the present disclosure provides a second base station, which includes: a processor; and a memory connected to the processor via a bus interface and configured to store programs and data used by the processor when the processor executes operations, wherein when the processor invokes and executes the programs and data stored in the memory, the processor executes: receiving an access message for requesting establishment of an auxiliary signaling link directed to the second base station sent by a user equipment, wherein the access message carries a signaling link identifier between the user equipment and a first base station, and the first base station is a master base station of the user equipment; in case that the second base station agrees to establish the auxiliary signaling link, allocating corresponding radio resources to the auxiliary signaling link, and sending, to the first base station, a request message for requesting establishment of the auxiliary signaling link according to the signaling link identifier, wherein the request message carries an identifier of a signaling bearer of the auxiliary signaling link and radio resource configuration information of the auxiliary signaling link; receiving a response message returned by the first base station in response to the request message; and sending the radio resource configuration information of the auxiliary signaling link to the user equipment, such that the user equipment establishes the auxiliary signaling link directed to the second base station.

According to still yet another aspect, the present disclosure provides a device for establishing an auxiliary signaling link, and the device is applied to a user equipment and includes: a sending unit, configured for, in case that a new auxiliary signaling link needs to be established, determining a second base station corresponding to the auxiliary signaling link, and sending, to the second base station, an access message for requesting establishment of the auxiliary signaling link directed to the second base station, wherein the access message carries a signaling link identifier between the user equipment and a first base station, and the first base station is a master base station of the user equipment; a receiving unit, configured for receiving radio resource configuration information of the auxiliary signaling link sent by the second base station after the second base station allocates corresponding radio resources to the auxiliary signaling link, wherein the radio resource configuration information of the auxiliary signaling link is sent after the second base station sent, to the first base station, a request message for requesting establishment of the auxiliary signaling link and received a response message returned by the first base station; and an establishing unit, configured for configuring a layer-2 link parameter according to the radio resource configuration information of the auxiliary signaling link and initiating a node synchronization process to the second base station to establish the auxiliary signaling link directed to the second base station.

In the above technical solution, the sending unit is further configured for: determining whether the new auxiliary signaling link needs to be established or not according to a measurement report of radio access networks and/or received radio resource management information.

In still yet another aspect, the present disclosure provides a user equipment, which includes: a processor; and a memory connected to the processor via a bus interface and configured to store programs and data used by the processor when the processor executes operations, wherein when the processor invokes and executes the programs and data stored in the memory, the processor executes: in case that a new auxiliary signaling link needs to be established, determining, a second base station corresponding to the auxiliary signaling link, and sending, to the second base station, an access message for requesting establishment of the auxiliary signaling link directed to the second base station, wherein the access message carries a signaling link identifier between the user equipment and a first base station, and the first base station is a master base station of the user equipment; receiving radio resource configuration information of the auxiliary signaling link sent by the second base station after the second bae station allocates corresponding radio resources to the auxiliary signaling link, wherein the radio resource configuration information of the auxiliary signaling link is sent after the second base station sent, to the first base station, a request message for requesting establishment of the auxiliary signaling link and received a response message returned by the first base station; and establishing the auxiliary signaling link directed to the second base station, according to the radio resource configuration information of the auxiliary signaling link.

According to still yet another aspect, the present disclosure provides a device for establishing an auxiliary signaling link, and the device is applied to a first base station and includes: a receiving unit, configured for receiving a request message sent by a second base station and used for requesting establishment of the auxiliary signaling link directed to the second base station for a user equipment, wherein the first base station is a master base station of the user equipment, the request message is sent by the second base station after the second base station allocates corresponding radio resources to the auxiliary signaling link, and the request message carries an identifier of a signaling bearer of the auxiliary signaling link and radio resource configuration information of the auxiliary signaling link; and a sending unit, configured for updating radio configuration information of the user equipment saved by the first base station, according to the request message, and sending a response message to the second base station.

According to still yet another aspect, the present disclosure provides a first base station, which includes: a processor; and a memory connected to the processor via a bus interface and configured to store programs and data used by the processor when the processor executes operations, wherein when the processor invokes and executes the programs and data stored in the memory, the processor executes: receiving a request message sent by a second base station and used for requesting establishment of an auxiliary signaling link directed to the second base station for a user equipment, wherein the first base station is a master base station of the user equipment, the request message is sent by the second base station after the second base station allocates corresponding radio resources to the auxiliary signaling link, and carries an identifier of a signaling bearer of the auxiliary signaling link and radio resource configuration information of the auxiliary signaling link; and sending a response message to the second base station according to the request message.

Compared with the related art, the method and the device for establishing the auxiliary signaling link, the base station and the user equipment provided by the present disclosure allow the user equipment to establish the auxiliary signaling links on the plurality of radio access systems, and thus, for a signaling bearer having an auxiliary link, a RRC signaling message thereon is allowed to be transmitted to the user equipment on a plurality of master/secondary links simultaneously. Thus, a reliability of the signaling transmission may be improved, and a success rate of subsequent handing-over control based on the signaling may be increased.

### BRIEF DESCRIPTION OF THE DRAWINGS

In order to describe technical solutions in embodiments of the present application or related arts more clearly, drawings used in description of the embodiments of the present application or related arts will be briefly described hereinafter. Obviously, the drawings in the following descriptions are merely some of the embodiments of the present application, and based on these drawings, a person skilled in the art may also obtain other drawings without paying any creative labor. The following drawings are not necessarily drawn in scale according to actual sizes, but the emphasis is placed upon illustrating a gist of the present application.
Fig. 1 is a schematic view of dual connections in an environment covered by multiple radio access systems in the related art;
Fig. 2 is a schematic view of a fusion scenario of different radio access systems in the related art;
Fig. 3 is a flowchart of a method for establishing an auxiliary signaling link at a first base station side according to some embodiments of the present disclosure;
Fig. 4 is a flowchart of a method for establishing the auxiliary signaling link at a second base station side according to some embodiments of the present disclosure;
Fig. 5 is a flowchart of a method for establishing the auxiliary signaling link at a user equipment side according to some embodiments of the present disclosure;
Fig. 6 is an overall flowchart of a method for establishing the auxiliary signaling link according to some embodiments of the present disclosure;
Fig. 7 is a structural schematic diagram of a device for establishing an auxiliary signaling link according to some embodiments of the present disclosure;
Fig. 8 is a structural schematic diagram of a first base station according to some embodiments of the present disclosure;
Fig. 9 is another structural schematic diagram of a device for establishing an auxiliary signaling link according to some embodiments of the present disclosure;
Fig. 10 is a structural schematic diagram of a second base station according to some embodiments of the present disclosure;
Fig. 11 is another structural schematic diagram of a device for establishing an auxiliary signaling link according to some embodiments of the present disclosure;
Fig. 12 is a structural schematic diagram of a user equipment according to some embodiments of the present disclosure;
Fig. 13 is a flowchart of a method for establishing the auxiliary signaling link at a second base station side according to some embodiments of the present disclosure;
Fig. 14 is a flowchart of a method for establishing the auxiliary signaling link at a user equipment side according to some embodiments of the present disclosure;
Fig. 15 is a flowchart of the method for establishing the auxiliary signaling link at a first base station side according to some embodiments of the present disclosure;
Fig. 16 is an overall flowchart of a method for establishing the auxiliary signaling link according to some embodiments of the present disclosure;
Fig. 17 is a structural schematic diagram of a device for establishing an auxiliary signaling link according to some embodiments of the present disclosure;
Fig. 18 is a structural schematic diagram of a second base station according to some embodiments of the present disclosure;
Fig. 19 is another structural schematic diagram of a device for establishing an auxiliary signaling link according to some embodiments of the present disclosure;
Fig. 20 is a structural schematic diagram of a user equipment according to some embodiments of the present disclosure;
Fig. 21 is another structural schematic diagram of a device for establishing an auxiliary signaling link according to some embodiments of the present disclosure; and
Fig. 22 is a structural schematic diagram of a first base station according to some embodiments of the present disclosure.

### DETAILED DESCRIPTION

In order to make objectives, technical solutions and advantages of the embodiments of the present disclosure more clear, the technical solutions of the embodiments of the present disclosure will be described hereinafter clearly and completely in conjunction with the drawings of the embodiments of the present disclosure. Obviously, the described embodiments are merely a part of, rather than all of, the embodiments of the present disclosure. Based on the described embodiments of the present disclosure, all of other embodiments obtained by a person skilled in the art without paying any creative effort also fall within the scope of the present disclosure.

In a dual-connection scenario, a User Equipment (UE) works with a Master eNB (MeNB) and a Secondary eNB (SeNB) simultaneously. In case that the UE needs a hand-over between MeNBs (i.e., handing over from a source MeNB to a target MeNB), it is required to maintain a user-plane connection with the secondary base station (SeNB) during handing over in order to maintain the dual connections. During handing over, a handing-over signaling is only sent from the source MeNB to the UE. Accordingly, after the handing over succeeds, the UE may return a completion signaling of the handing-over to the target MeNB. After the handing over completes, a user-plane tunnel between the target MeNB and the SeNB is established, and through the tunnel, a downlink Packet Data Convergence Protocol (PDCP) Protocol Data Unit (PDU) from the target MeNB is transmitted to the SeNB in a transparent manner, and a uplink PDCP PDU from the SeNB will be transmitted to the target MeNB in a transparent manner.

Since only one signaling connection is provided for the UE and a plurality of simultaneous signaling connections (especially in the plurality of radio access systems) are not provided for the UE in the related art, a signaling associated with the handing over may not be received properly possibly due to factors such as a change of channel conditions or a unreasonable configuration of handing-over parameters when performing a traditional handing-over procedure with the above dual connections being maintained (especially between different systems) or when performing the handing-over operation between different systems. Thus, a handing-over performance and an overall transmission rate of the system may be affected.

The present disclosure provides a method for establishing an auxiliary signaling link. By establishing the auxiliary signaling link for the UE, a transmission reliability of signaling in the dual-connection scenario may be improved, and a reliability of subsequent handing-over processes of the UE may be ensured, and an overall handing-over performance of the system may be significantly improved. In order to make technical problems, the technical solutions and the advantages of the present disclosure more apparent, descriptions will be described hereinafter in details in conjunction with the drawings and the embodiments.

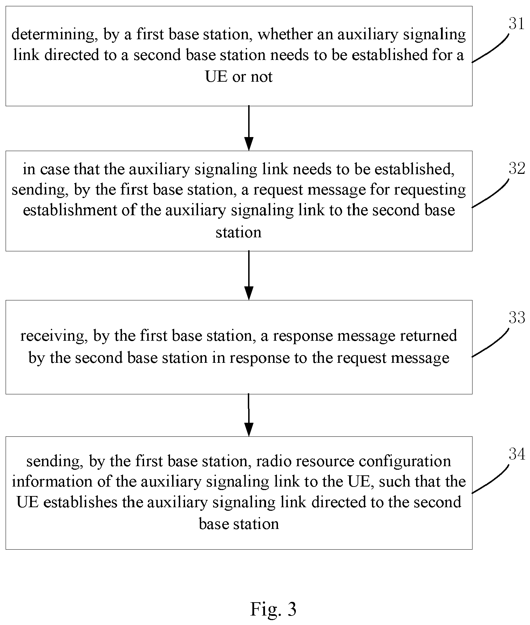

In some embodiments, referring to Fig. 3, Fig. 3 shows a method for establishing an auxiliary signaling link at a master base station (a first base station) side of a user equipment (UE). As shown in Fig. 3, the method for establishing the auxiliary signaling link provided by the embodiments includes steps 31-34.

Step 31: determining, by the first base station, whether an auxiliary signaling link directed to a second base station needs to be established for the UE or not, wherein the first base station is a master base station of the UE, and a wireless connection is maintained between the UE and the first base station, that is, the UE is connected to the first base station.

Herein, the first base station and the second base station may belong to different radio access systems, respectively, or may also belong to a same radio access system. For example, the first base station may belong to a fourth Generation (4G) wireless access system, a fifth Generation (5G) wireless access system or a WIFI (Wireless Fidelity) access system, and the second base station may belong to the 4G, the 5G, the WIFI or other radio access systems, etc. The first base station may be a base station corresponding to a master service cell of the UE, i.e., the master base station. In case that the first base station and the second base station belong to different radio access systems, respectively, in each of the radio access systems, information associated with other radio access systems, for example, wireless parameters and wireless policies of the other radio access systems (e.g., whether the auxiliary signaling link is supported or not) needs to be configured in advance.

The first base station may determine whether the auxiliary signaling link needs to be established for the UE or not according to a received measurement report of the UE and/or Radio Resource Management (RRM) information of a network, and in case that the auxiliary signaling link needs to be established, the first base station may select a second base station for establishing the auxiliary signaling link. For example, in case that the measurement report of the UE indicates that a signal quality of the master service cell of the UE is relatively poor, or in case that the UE has found a cell of better signal quality (the cell belongs to a base station other than the master base station), the first base station may select a base station (referred to as the second base station) which has a signal quality satisfying a predetermined condition as the secondary base station according to the measurement report. As another example, in case that the RRM information indicates that a current cell load of the master base station is greater than a predetermined high-load threshold and a current cell load of another base station (referred to as the second base station) is less than a predetermined low-load threshold, it may be determined that the auxiliary signaling link needs to be established for the UE, and the second base station is selected as the secondary base station of the UE.

According to the embodiment, in the above step 31, before determining whether the auxiliary signaling link directed to the second base station needs to be established for the UE or not, the UE may not have established an auxiliary signaling link for any base station, or may also have maintained one or more auxiliary signaling links for one or more secondary base stations.

Step 32: in case that the auxiliary signaling link needs to be established, sending, by the first base station, a request message for requesting establishment of the auxiliary signaling link to the second base station, wherein the request message carries an identifier of a signaling bearer of the auxiliary signaling link requested to be established.

Herein, because the above request message is sent by the first base station to the second base station selected as the auxiliary base station, and this request message may carry an identifier of an auxiliary signaling bearer of the auxiliary signaling link requested to be established. Moreover, the request message may further carry a transport layer address of a master base station corresponding to the auxiliary signaling bearer, and the transport layer address may be used for establishing a user-plane tunnel between the first base station and the second base station subsequently, and the PDCP PDU of the RRC signaling may be transmitted through the tunnel.

Step 33: receiving, by the first base station, a response message returned by the second base station in response to the request message, wherein the response message carries radio resource configuration information of the auxiliary signaling link.

Herein, after the second base station receives the above request message, the second base station may execute an admission control according to a wireless policy of the second base station. For example, in case that a current load of the second base station is less than a predetermined threshold and a current wireless policy allows establishment of the auxiliary signaling link, the second base station determines that the admission succeeds, and the second base station acts as the secondary base station of the UE and allocates corresponding radio resources to the auxiliary signaling link, and returns the response message to the first base station. The response message may carry the radio resource configuration information of the auxiliary signaling link. Obviously, the response message may further carry a transport layer address of the second base station corresponding to the auxiliary signaling bearer.

Herein, the radio resource configuration information of the auxiliary signaling link may be a layer-2 (Layer 2) configuration parameter of the signaling bearer. For example, for the 4G radio access system, the above radio resource configuration information may specifically be configuration parameters of a Radio Link Control (RLC) layer entity/Media Access Control (MAC) layer entity; and for the 5G or other radio access systems, the above radio resource configuration information may be configuration parameters of a corresponding adaptation layer entity /MAC layer entity. Furthermore, the above radio resource configuration information may further include configuration parameters of a physical layer entity.

Step 34: sending, by the first base station, radio resource configuration information of the auxiliary signaling link to the UE, such that the UE may establish the auxiliary signaling link directed to the second base station.

Herein, the first base station sends the received radio resource configuration information of the auxiliary signaling link to the UE. For example, the first base station sends the above radio resource configuration information to the UE through a RRC reconfiguration signaling, to make the UE perform configuration related to the auxiliary signaling link so that the UE may configure a layer-2 link according to the above radio resource configuration information subsequently; and the first base station may initiate a node synchronization process to the second base station to establish the auxiliary signaling link directed to the second base station.

It can be seen from the above steps that, the embodiment allows the master base station (the first base station) to select one or more appropriate secondary base stations (the second base stations) as an alternative transmission path of a Signaling Radio Bearer (SRB), i.e., the auxiliary signaling link. For the auxiliary signaling link, a RRC layer entity and a PDCP layer entity corresponding to the auxiliary signaling link are located at the master base station, whereas the RLC layer entity, the MAC layer entity and the physical layer entity corresponding to the link are located at a corresponding secondary base station. After the above Step 34, in case that the UE has successfully established the auxiliary signaling link for the second base station, the first base station may transmit the signaling bearer on the auxiliary signaling link to the UE on a master signaling link corresponding to the first base station and the auxiliary signaling link corresponding to the second base station, simultaneously. For example, for a signaling bearer of the auxiliary signaling link, the RRC signaling message on the signaling bearer may be transmitted on the master signaling link of the master base station and the auxiliary signaling link of the secondary base station simultaneously, and thus a reliability of signaling transmission may be improved.

In addition, with respect to a user plane, the PDCP PDU of the RRC signaling may be transmitted between the master base station and the secondary base station by the tunnel, and data is transmitted between the secondary base station and the UE by means of corresponding access network transmission techniques (e.g., the 4G, the 5G, the WIFI or other access systems).

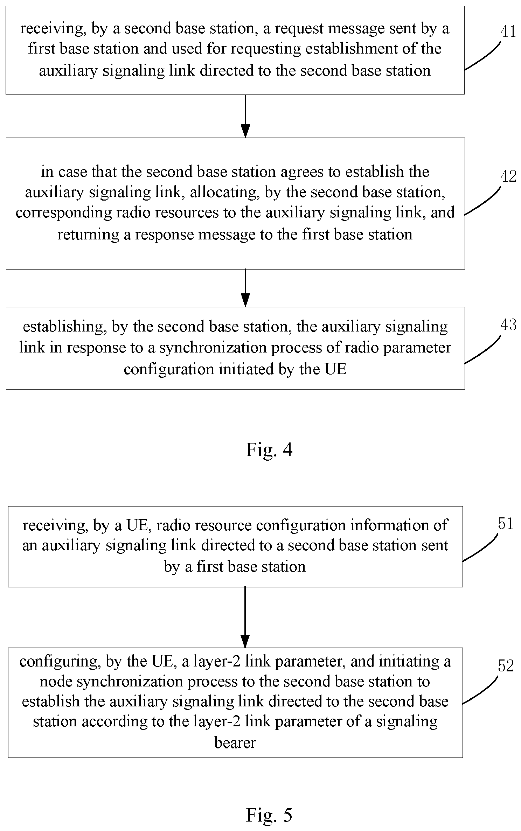

A method for establishing an auxiliary signaling link at a second base station side according to the present disclosure will be further described hereinafter, referring to Fig. 4, the method includes steps 41-43.

Step 41: receiving, by the second base station, a request message sent by a first base station and used for requesting establishment of the auxiliary signaling link directed to the second base station for a user equipment (UE), wherein the first base station is a master base station of the UE, and a wireless connection is maintained between the UE and the first base station, i.e., the UE is connected to the first base station. The request message carries an identifier of a signaling bearer of the auxiliary signaling link requested to be established, and may further carry a transport layer address of the first base station corresponding to the signaling bearer.

Step 42: in case that the second base station agrees to establish the auxiliary signaling link, allocating, by the second base station, corresponding radio resources to the auxiliary signaling link, and returning a response message carrying radio resource configuration information of the auxiliary signaling link to the first base station.

Herein, in case that the first base station selects to establish a new auxiliary signaling link for the UE via the second base station, the above request message is sent to the second base station. The second base station performs an admission control according to the request message, and in case that the second base station agrees to establish the auxiliary signaling link for the UE, the second base station allocates corresponding radio resources to the auxiliary signaling link, and sends a response message carrying the radio resource configuration information of the auxiliary signaling link to the first base station according to the allocated resources. The response message may also carry a transport layer address of the second base station corresponding to the auxiliary signaling bearer.

Herein, the radio resource configuration information of the auxiliary signaling link may be a layer-2 (Layer 2) configuration parameter of the auxiliary signaling bearer. For example, for the 4G radio access system, the above radio resource configuration information may specifically be configuration parameters of a Radio Link Control (RLC) layer entity/Media Access Control (MAC) layer entity; and for the 5G or other radio access systems, the above radio resource configuration information may be a configuration parameter of a corresponding adaptation layer entity/MAC layer entity. Furthermore, the above radio resource configuration information may further include a configuration parameter of a physical layer entity.

Step 43: establishing, by the second base station, the auxiliary signaling link in response to a synchronization process of radio parameter configuration initiated by the UE, wherein the synchronization process is initiated by the UE according to the radio resource configuration information of the auxiliary signaling link forwarded by the first base station.

Herein, after the first base station receives the above response message, the first base station may send the radio resource configuration information of the auxiliary signaling link to the UE through a RRC reconfiguration signaling. The UE executes a RRC reconfiguration process according to the above radio resource configuration information, and initiates a node synchronization process to the second base station to establish the auxiliary signaling link between the UE and the second base station.

Accordingly, as shown in Fig. 5, a method for establishing an auxiliary signaling link at a UE side according to the embodiment includes steps 51-52.

Step 51: receiving, by the UE, radio resource configuration information of an auxiliary signaling link directed to the second base station sent by a first base station, wherein the first base station is a master base station of the UE, and the second base station is a base station selected by the first base station in case that the auxiliary signaling link needs to be established for the UE.

Herein, the first base station may send the radio resource configuration information of the above auxiliary signaling link to the UE through the RRC reconfiguration signaling.

Step 52: configuring, by the UE, a layer-2 link parameter according to the radio resource configuration information of the auxiliary signaling link and initiating a node synchronization process to the second base station to establish the auxiliary signaling link directed to the second base station.

Herein, for the 4G radio access system, the layer-2 link parameter configured by the UE may be a parameter of the RLC layer entity/MAC layer entity; and for the 5G and other radio access systems, the layer-2 link parameter configured by the UE may be a parameter of a corresponding adaptation layer entity/MAC layer entity. Moreover, the UE may further configure a parameter of a physical layer entity for the auxiliary signaling link. After the UE completes the above configuration, the UE may return a RRC reconfiguration completion message to the first base station, and thereby a high-layer handshaking process of the auxiliary signaling link is completed. Moreover, the UE may also initiate the node synchronization process to the second base station to complete a physical-layer handshaking process with the second base station.

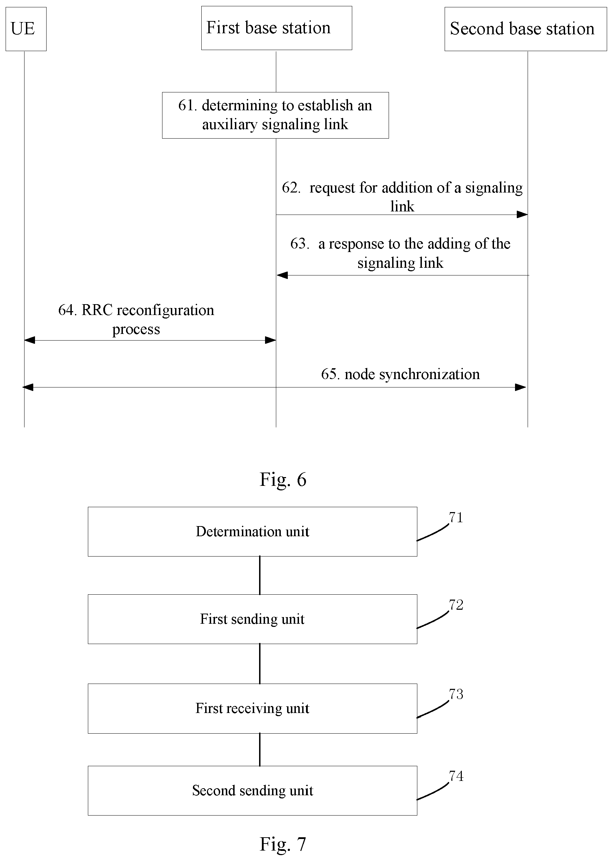

The method for establishing the auxiliary signaling link at the first base station (the master base station) side, at the second base station (the secondary base station) side, and the UE side according to the present disclosure are described hereinbefore, respectively. Fig. 6 shows an interaction process among the first base station, the second base station, the UE in the above method.

Step 61: determining, by the first base station, to establish a new auxiliary signaling link for the UE.

Herein, the first base station may determine whether the auxiliary signaling link needs to be added for the UE or not according to a measurement report of the UE or a RRM information of a network, and select a second base station for establishing the auxiliary signaling link. Specifically, each of the first base station and the second base station may belong to one of the 4G, the 5G, the WIFI or other radio access systems, and the first base station and the second base station may belong to a same radio access system or may also belong to different radio access systems, respectively. A wireless connection is maintained between the UE and the first base station, that is, the UE is connected to the first base station. Before the Step 61, the UE may have been maintained one or more wireless connections with one or more secondary base stations, or may also have not established an auxiliary signaling link with any base station yet.

Step 62: sending, by the first base station, a request message for adding a signaling link to the second base station, to request the second base station to establish an auxiliary signaling link for the UE, wherein the signaling link is directed to the second base station. The request message may carry an identifier of a signaling bearer of the auxiliary signaling link. The request message may further carry information such as a transport layer address of the master base station corresponding to the auxiliary signaling bearer.

Step 63: in case that the second base station agrees to establish the auxiliary signaling link, feeding back, by the second base station, the response message for adding the signaling link to the first base station, wherein the response message includes radio resource configuration information of the auxiliary signaling link, for example, the message may carry a layer-2 configuration parameter of the auxiliary signaling bearer of the auxiliary signaling link (for the 4G, the layer-2 configuration parameter may be the RLC entity/MAC layer entity/physical layer entity or the like.; and for the 5G or other access system, the layer-2 configuration parameter may be a corresponding adaptation layer entity/MAC layer entity/physical layer entity or the like.), or the like, and may also carry a transport layer address of the secondary base station corresponding to the auxiliary signaling bearer, or the like.

Step 64: informing, by the first base station, the UE of the radio resource configuration information of the auxiliary signaling link through an air-interface RRC reconfiguration signaling.

Step 65: performing, by the UE, a node synchronization process with a new network node (the second base station) according to the radio resource configuration information of the auxiliary signaling link to synchronize radio parameter configuration, thereby establishing the auxiliary signaling link between the UE and the second base station.

In the present disclosure, the interaction process for establishing the auxiliary signaling link is initiated by the master base station to establish the auxiliary signaling link between the UE and the newly selected secondary base station. Thus, for a subsequent signaling bearer having an auxiliary signaling link, a signaling message (e.g., a RRC signaling message) on the signaling bearer may be sent on a signaling link of the master base station and the auxiliary signaling link of the secondary base station simultaneously. Thus, a reliability of signaling transmission is improved, and a reliable support for realization of network control (such as handing over) is provided.

The present disclosure further provides a device and an apparatus for realizing the above method hereinafter.

Referring to Fig. 7, the embodiment provides a device for establishing an auxiliary signaling link which may be applied to a first base station, and the device includes a determination unit 71, a first sending unit 72, a first receiving unit 73, and a second sending unit 74.

The determination unit 71 is configured for determining whether an auxiliary signaling link directed to a second base station needs to be established for a UE or not, wherein a master base station of the UE is the first base station.

The first sending unit 72 is configured for, in case that the auxiliary signaling link needs to be established, sending a request message to the second base station for requesting establishment of the auxiliary signaling link, wherein the request message carries an identifier of a signaling bearer of the auxiliary signaling link requested to be established.

The first receiving unit 73 is configured for receiving a response message returned by the second base station in response to the request message, wherein the response message carries radio resource configuration information of the auxiliary signaling link.

The second sending unit 74 is configured for sending the radio resource configuration information of the auxiliary signaling link to the UE, such that the UE may establish the auxiliary signaling link directed to the second base station.

Herein, the above request message may further carry a transport layer address of the first base station corresponding to an auxiliary signaling bearer, and the response message may further carry a transport layer address of the second base station corresponding to the auxiliary signaling bearer.

Herein, the determination unit 71 is further configured for determining whether the auxiliary signaling link needs to be established for the UE or not according to a received measurement report of the UE and/or radio resource management information, and in case that the auxiliary signaling link needs to be established, select the second base station corresponding to the auxiliary signaling link.

The second sending unit 74 is specifically configured to send the radio resource configuration information of the auxiliary signaling link to the UE by carrying the radio resource configuration information of the auxiliary signaling link in a Radio Resource Control (RRC) reconfiguration signaling.

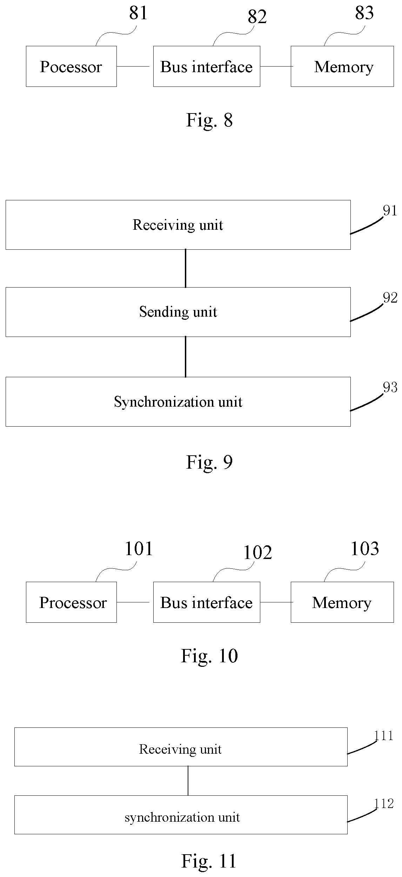

The present disclosure further provides a first base station, as shown in Fig. 8, the first base station includes a processor 81 and a memory 83 connected to the processor 81 via a bus interface 82. The memory 83 is configured to store programs and data used by the processor 81 when executing operations, and when the processor 81 invokes and executes the programs and data stored in the memory 83, the processor 81 executes the following steps: determining whether an auxiliary signaling link directed to the second base station needs to be established for a UE or not, wherein a master base station of the UE is the first base station; in case that the auxiliary signaling link needs to be established, sending a request message to the second base station for requesting establishment of the auxiliary signaling link, wherein the request message carries an identifier of a signaling bearer of the auxiliary signaling link requested to be established; receiving a response message returned by the second base station in response to the request message, wherein the response message carries radio resource configuration information of the auxiliary signaling link; and sending the radio resource configuration information of the auxiliary signaling link to the UE, such that the UE may establish the auxiliary signaling link directed to the second base station.

Herein, the above request message may further carry a transport layer address of the first base station corresponding to the auxiliary signaling bearer, and the response message may further carry a transport layer address of the second base station corresponding to the auxiliary signaling bearer.

As shown in Fig. 9, the present disclosure further provides a device for establishing an auxiliary signaling link which may be applied to the second base station. As shown in Fig. 9, the device includes a receiving unit 91, a sending unit 92 and a synchronization unit 93.

The receiving unit 91 is configured for receiving a request message sent by the first base station and used for requesting establishment of the auxiliary signaling link directed to the second base station for the UE, wherein the first base station is a master base station of the UE, and the request message carries an identifier of a signaling bearer of the auxiliary signaling link requested to be established. Herein, the request message may further carry a transport layer address of the first base station corresponding to an auxiliary signaling bearer.

The sending unit 92 is configured for, in case that the second base station agrees to establish the auxiliary signaling link, allocating corresponding radio resources to the auxiliary signaling link, and returning a response message carrying radio resource configuration information of the auxiliary signaling link to the first base station; Herein, the response message may further carry a transport layer address of the second base station corresponding to the auxiliary signaling bearer.

The synchronization unit 93 is configured for establishing the auxiliary signaling link in response to a synchronization process of radio parameter configuration initiated by the UE, wherein the synchronization process is initiated by the UE according to the radio resource configuration information of the auxiliary signaling link forwarded by the first base station.

The present disclosure further provides a second base station. As shown in Fig. 10, the second base station includes a processor 101 and a memory 103 connected to the processor 101 via a bus interface 102.

The memory 103 is configured to store programs and data used by the processor 101 when executing operations, and when the processor 101 invokes and executes the programs and data stored in the memory 103, the processor 101 executes the following steps: receiving a request message sent by a first base station and used for requesting establishment of an auxiliary signaling link directed to the second base station for a UE, wherein the first base station is a master base station of the UE, and the request message carries an identifier of a signaling bearer of the auxiliary signaling link requested to be established; in case that the second base station agrees to establish the auxiliary signaling link, allocating corresponding radio resources to the auxiliary signaling link, and returning a response message carrying radio resource configuration information of the auxiliary signaling link to the first base station; and establishing the auxiliary signaling link in response to a synchronization process of radio parameter configuration initiated by the UE, wherein the synchronization process is initiated by the UE according to the radio resource configuration information of the auxiliary signaling link forwarded by the first base station.

As shown in Fig. 11, the present disclosure further provides another device for establishing an auxiliary signaling link which may be applied to a user equipment (UE). As shown in Fig. 11, the device includes a receiving unit 111 and a synchronization unit 112.

The receiving unit 111 is configured for receiving radio resource configuration information of an auxiliary signaling link directed to a second base station sent by a first base station, wherein the first base station is a master base station of the UE, and the second base station is a base station selected by the first base station in case that the auxiliary signaling link needs to be established for the UE.

The synchronization unit 112 is configured for initiating a node synchronization process to the second base station according to the radio resource configuration information of the auxiliary signaling link to establish the auxiliary signaling link directed to the second base station.

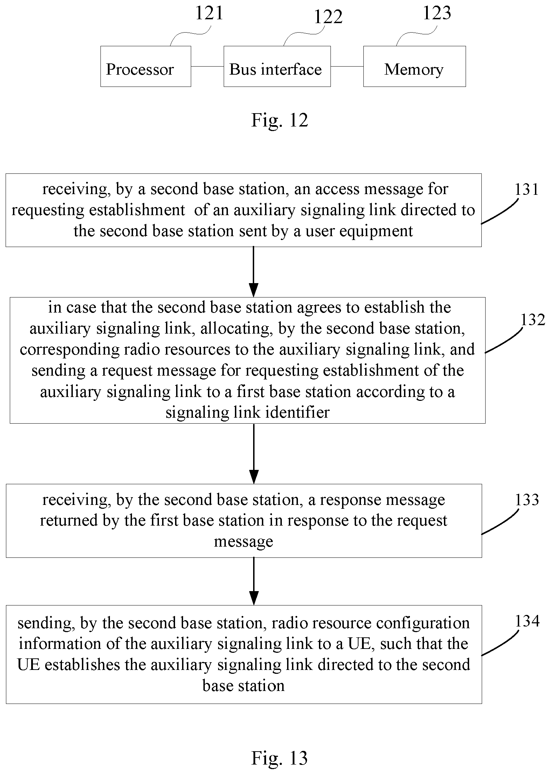

The present disclosure further provides a user equipment (UE). As shown in Fig. 12, the UE includes a processor 121 and a memory 123 connected to the processor 121 via a bus interface 122. The memory 123 is configured to store programs and data used by the processor 121 when executing operations, and when the processor 121 invokes and executes the programs and data stored in the memory 123, the processor 121 executes the following steps: receiving radio resource configuration information of an auxiliary signaling link directed to a second base station sent by a first base station, wherein the first base station is a master base station of the UE, and the second base station is a base station selected by the first base station in case that the auxiliary signaling link needs to be established for the UE; and initiating a node synchronization process to the second base station according to the radio resource configuration information of the auxiliary signaling link to establish the auxiliary signaling link directed to the second base station.

In some embodiments, the method for establishing an auxiliary signaling link is provided. Whether a new auxiliary signaling link needs to be established or not is determined by a UE, such that the UE may initiate a process for establishing the auxiliary signaling link according to a measurement report of the UE on a wireless network and/or according to a received RRM information of the network.

In the some embodiments, the first base station is used as the master base station of the UE (i.e., a base station corresponding to a master service cell of the UE), and the second base station is a base station (the secondary base station) selected by the UE to establish the auxiliary signaling link. The first base station and the second base station may belong to different radio access systems, respectively, and may also belong to a same radio access system. For example, the first base station may belong to the 4G, the 5G or the WIFI access system, and the second base station may belong to the 4G, the 5G, the WIFI or other radio access systems etc. Moreover, in the some embodiments, before the UE determines whether the new auxiliary signaling link needs to be established, the UE may not have an auxiliary signaling link having been established with any base station, and may also have maintained one or more auxiliary signaling links with one or more secondary base stations.

Referring to Fig. 13, Fig. 13 shows a method for establishing an auxiliary signaling link at a second base station (a base station to be selected as a secondary base station) side of a user equipment (UE). As shown in Fig. 13, the method for establishing the auxiliary signaling link provided by the embodiment includes steps 131-134.

Step 131: receiving, by the second base station, an access message sent by the UE and used for requesting establishment of the auxiliary signaling link directed to the second base station, wherein the access message carries a signaling link identifier between the UE and a first base station, and the first base station is a master base station of the UE.

Herein, the access message is used to request establishment of the auxiliary signaling link directed to the second base station, may carry the signaling link identifier of a signaling link between the UE and the first base station, and may also carry an IP address corresponding to the first base station, such that the second base station may initiate a request message for requesting establishment of the auxiliary signaling link of the UE to the first base station.

Step 132: in case that the second base station agrees to establish the auxiliary signaling link, allocating, by the second base station, corresponding radio resources to the auxiliary signaling link, and sending the request message for requesting establishment of the auxiliary signaling link to the first base station according to the signaling link identifier, wherein the request message carries information such as an identifier of a signaling bearer of the auxiliary signaling link, radio resource configuration information of the auxiliary signaling link and a transport layer address of the second base station corresponding to the auxiliary signaling link.

Herein, the second base station performs an admission control according to the access message, and in case that the second base station agrees to establish the auxiliary signaling link for the UE, allocates corresponding radio resources to the auxiliary signaling link, and sends the request message carrying the identifier of the signaling bearer of the auxiliary signaling link and the radio resource configuration information of the auxiliary signaling link to the first base station according to the allocated radio resources. The request message may further carry the transport layer address of the second base station corresponding to the signaling bearer of the auxiliary signaling link.

Step 133: receiving, by the second base station, a response message returned by the first base station in response to the request message. The response message may carry a transport layer address of the first base station corresponding to the signaling bearer of the auxiliary signaling link.

Herein, after the first base station receives the above request message, the first base station updates radio configuration information of the UE saved by the first base station. For example, the first base station adds the radio resource configuration information of the new auxiliary signaling link, the identifier of the signaling bearer of the auxiliary signaling link, and the transport layer address of the second base station into the radio configuration information of the UE. Moreover, the first base station may also return, to the second base station, a transport layer address of the first base station corresponding to the signaling bearer of the UE in the above response message, so that the transport layer address of the first base station may be used for subsequently establishing a tunnel with the second base station at a user plane to transmit an auxiliary signaling.

Step 134: sending, by the second base station, radio resource configuration information of the auxiliary signaling link to the UE, such that the UE may establish the auxiliary signaling link directed to the second base station.

Herein, the second base station sends the received radio resource configuration information of the auxiliary signaling link to the UE. For example, the second base station may send the radio resource configuration information to the UE through a RRC reconfiguration signaling to make the UE perform configuration related to the auxiliary signaling link, so that the UE may configure a layer-2 link parameter according to the above radio resource configuration information subsequently and may initiate the node synchronization process to the second base station to establish the auxiliary signaling link between the UE and the second base station. Moreover, after the UE completes configuration of the layer-2 link parameter, the UE may return a RRC reconfiguration completion message to the first base station, wherein the RRC reconfiguration completion message may be sent on a signaling link of the master base station. In case that the auxiliary signaling link has already been established, the RRC reconfiguration completion message may also be sent on the auxiliary signaling link of the second base station, or may be sent on the signaling link of the master base station and the auxiliary signaling link of the second base station simultaneously.

Through the above steps, in the some embodiments, a process for establishing the auxiliary signaling link initiated by the UE is realized, and the auxiliary signaling link is established between the UE and the secondary base station so as to increase a reliability of subsequent signaling transmission.

Obviously, in the above step 132, after corresponding radio resources are allocated to the auxiliary signaling link, the radio resource configuration information of the auxiliary signaling link may also be sent to the UE directly without waiting to be sent in step 134, such that the UE may establish the auxiliary signaling link for the second base station.

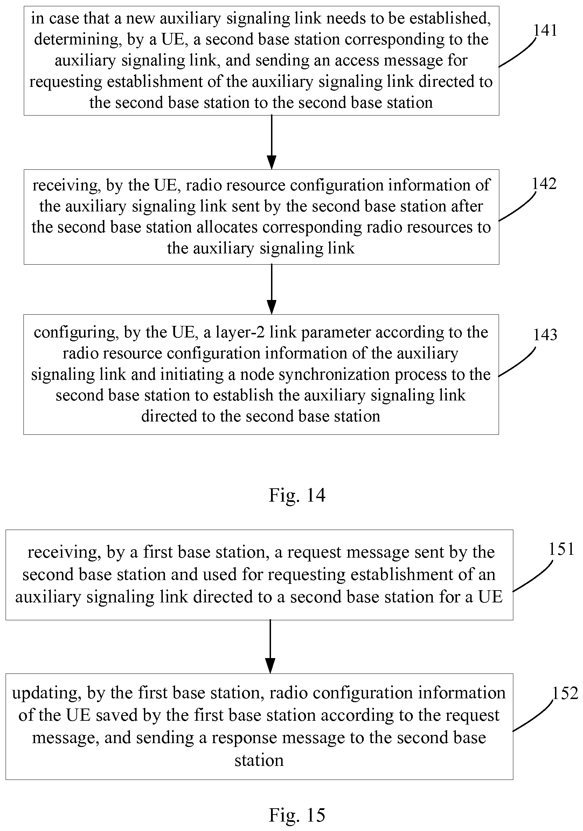

Referring to Fig. 14, Fig. 14 shows a method for establishing an auxiliary signaling link at a UE side. As shown in Fig. 14, the method for establishing an auxiliary signaling link provided in some embodiments includes the following steps 141-143.

Step 141: in case that a new auxiliary signaling link needs to be established, determining, by the UE, a second base station corresponding to the auxiliary signaling link, and sending, to the second base station, an access message for requesting establishment of the auxiliary signaling link directed to the second base station, wherein the access message carries a signaling link identifier between the UE and a first base station, and the first base station is a master base station of the UE.

Herein, the UE may determine whether the auxiliary signaling link needs to be established for the UE according to a measurement report on a plurality of radio access systems in the UE and/or RRM information of the radio access systems. In case that the auxiliary signaling link needs to be established, the UE may select the second base station for establishing the auxiliary signaling link, and send the access message to the second base station.

For example, in case that the measurement report in the UE indicates that a signal quality of a master service cell of the UE is relatively poor, or in case that the UE has found a cell having a better signal quality (which belongs to a base station other than the master base station), the first base station may select a base station whose signal quality satisfies a predetermined condition (this base station is assumed to be the second base station) as the secondary base station according to the measurement report. As another example, in case that the RRM information indicates that a current load of the cell of the master base station is greater than a predetermined high-load threshold and a current load of a base station (this base station is assumed to be the second base station) is less than a predetermined low-load threshold, it may be determined that the auxiliary signaling link needs to be established for the UE, and the second base station is selected as the secondary base station of the UE.

Step 142: receiving, by the UE, radio resource configuration information of the auxiliary signaling link sent by the second base station after the second base station allocates corresponding radio resources to the auxiliary signaling link.

Herein, the second base station performs an admission control according to the access message. In case that the second base station agrees to establish the auxiliary signaling link for the UE, the second base station allocates corresponding radio resources to the auxiliary signaling link. After the second base station allocates the radio resources, the second base station may send the radio resource configuration information of the auxiliary signaling link to the UE directly, or may also send a request message for requesting establishment of the auxiliary signaling link to the first base station firstly, and send the radio resource configuration information of the auxiliary signaling link to the UE after the second base station receives a response message returned by the first base station.

Step 143: configuring, by the UE, a layer-2 link parameter according to the radio resource configuration information of the auxiliary signaling link and initiating a node synchronization process to the second base station to establish the auxiliary signaling link directed to the second base station.

Herein, for a 4G radio access system, the layer-2 link parameter layer 2 configured by the UE may be a parameter of the RLC layer entity/the MAC layer entity; and for the 5G and the other radio access systems, the layer-2 link parameter configured by the UE may be a parameter of a corresponding adaptation layer entity/the MAC layer entity. Moreover, the UE may further configure a parameter of a physical layer entity of the auxiliary signaling link or the like. After the UE completes the above configuration, the UE may return a RRC reconfiguration completion message to the first base station, thereby completing a high-layer handshaking process of the auxiliary signaling link. Moreover, the UE may also initiate the node synchronization process to the second base station to complete a physical-layer handshaking process with the second base station.

Referring to Fig. 15, Fig. 15 shows a method for establishing an auxiliary signaling link at a first base station (a master base station of a UE) side. As shown in Fig. 15, the method includes steps 151-152.

Step 151: receiving, by a first base station, a request message sent by a second base station and used for requesting establishment of an auxiliary signaling link directed to the second base station for the UE, wherein the first base station is the master base station of the UE, the request message is sent by the second base station after the second base station allocates corresponding radio resources to the auxiliary signaling link and carries an identifier of a signaling bearer of the auxiliary signaling link and radio resource configuration information of the auxiliary signaling link. The request message may further carry information such as a transport layer address of the second base station corresponding to the auxiliary signaling bearer.

Step 152: updating, by the first base station, radio configuration information of the UE saved by the first base station according to the request message, and sending a response message to the second base station. The response message may carry a transport layer address of the first base station corresponding to the auxiliary signaling bearer.

Herein, through the above steps, a tunnel of the user plane between the first base station and the second base station may be established for transmitting auxiliary signaling of the UE, and realizing a transmission process of the auxiliary signaling between the second base station and the UE through the auxiliary signaling link between the UE and the second base station.

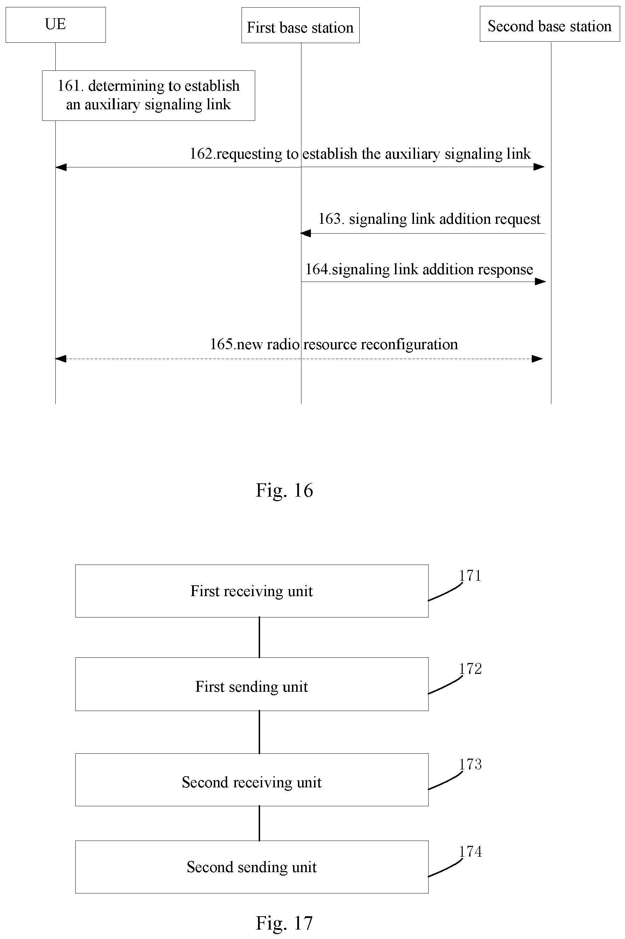

The method for establishing the auxiliary signaling link according to the present disclosure is described from the sides of the first base station (the master base station), the second base station (the secondary base station) and the UE respectively. Fig. 16 further shows an interaction process among the first base station, the second base station, and the UE in the above method.

Step 161: determining, by the UE, to establish a new auxiliary signaling link. It is assumed that the auxiliary signaling link is directed to the second base station.

Herein, the UE may determining whether the new auxiliary signaling link needs to be established according to a measurement report or a RRM information of a network, and in case that the auxiliary signaling line needs to be established, the UE selects the second base station used for establishing the auxiliary signaling link. Specifically, the first base station and the second base station may belong to the 4G, the 5G, the WIFI or other radio access systems, the first base station and the second base station may belong to a same radio access system or may belong to different radio access systems, respectively. A wireless connection is maintained between the UE and the first base station (the master base station), that is, the UE is connected to the first base station. Before performing the step 161, the UE may have maintained one or more wireless connections with one or more secondary base stations, or may have not yet established any auxiliary signaling link with any base station.

Step 162: sending, by the UE, an access message to the second base station, wherein the message includes a signaling link identifier between the UE and the first base station (the master base station) and information about the new auxiliary signaling link determined to be established.

Step 163: in case that the second base station agrees to establish the auxiliary signaling link, allocating, by the second base station, corresponding radio resources to the auxiliary signaling link, finding out the first base station according to the signaling link identifier of the first base station, and sending a request message for requesting addition of a signaling link, wherein the message includes an identifier of a signaling bearer to be established, radio resource configuration information of the auxiliary signaling link and a transport layer address of the secondary base station corresponding to the auxiliary signaling bearer, and so on.

The radio resource configuration information of the auxiliary signaling link may include a layer-2 configuration parameter of the auxiliary signaling bearer and so on. For example, for the 4G, the layer-2 configuration parameter may be a configuration parameter of a RLC entity/a MAC layer entity/a physical layer entity and the like; and for the 5G or other access systems, the layer-2 configuration parameter may be a configuration parameter of a corresponding adaptation layer entity/the MAC layer entity/the physical layer entity and the like.

Step 164: updating, by the first base station, radio parameter configuration of the UE saved by the first base station, and feeding back a response message to the second base station, wherein the message includes information such as a transport layer address of a master base station corresponding to the auxiliary signaling bearer so as to establish a tunnel of a user plane between the first base station and the second base station.

Step 165: sending, by the second base station, radio resource configuration information of the auxiliary signaling link to the UE, for example, sending the information through a RRC reconfiguration signaling; and configuring, by the UE, a layer-2 link parameter according to the information and initiating a node synchronization process to the second base station to establish the auxiliary signaling link directed to the second base station.

Herein, optionally, in the above step 163, after the second base station allocates corresponding radio resources to the auxiliary signaling link, the second base station may send the radio resource configuration information of the auxiliary signaling link to the UE directly without waiting to send the information in the above step 165.

In the embodiment, the process for establishing the auxiliary signaling link is initiated by the UE, and consequently the auxiliary signaling link is established between the UE and the newly selected secondary base station. Subsequently, for a signaling bearer having the auxiliary signaling link, a signaling message (e.g., a RRC signaling message) thereon may be sent on a signaling link of the master base station and the auxiliary signaling link of the secondary base station simultaneously, thus improving a reliability of signaling transmission, and providing a reliable support for network control (such as handing over).

The present disclosure further provides a device and an apparatus for realizing the above process hereinafter.

Referring to Fig. 17, the present disclosure provides a device for establishing an auxiliary signaling link, and the device may applied to the second base station and includes a first receiving unit 171, a first sending unit 172, a second receiving unit 173, and a second sending unit 174.

The first receiving unit 171 is configured for receiving an access message sent by a User Equipment (UE) and used for requesting establishment of the auxiliary signaling link directed to the second base station, wherein the access message carries a signaling link identifier between the UE and a first base station, and the first base station is a master base station of the UE.

The first sending unit 172 is configured for, in case that the second base station agrees to establish the auxiliary signaling link, allocating corresponding radio resources to the auxiliary signaling link, and sending a request message for requesting establishment of the auxiliary signaling link to the first base station according to the signaling link identifier, wherein the request message carries an identifier of a signaling bearer of the auxiliary signaling link and radio resource configuration information of the auxiliary signaling link; and the request message may further carry information such as a transport layer address of the second base station corresponding to the auxiliary signaling bearer.

The second receiving unit 173 is configured for receiving a response message returned by the first base station in response to the request message, wherein the response message may carry a transport layer address of the first base station corresponding to the auxiliary signaling bearer.

The second sending unit 174 is configured for sending the radio resource configuration information of the auxiliary signaling link to the UE, such that the UE may establish the auxiliary signaling link directed to the second base station.

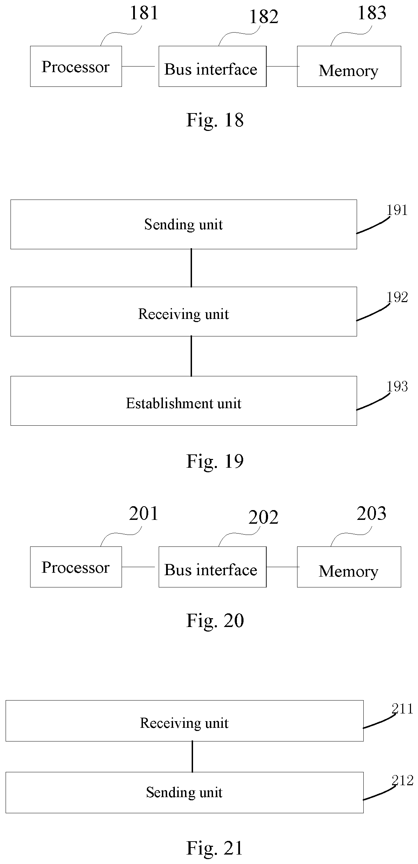

The present disclosure further provides a second base station. As shown in Fig. 18, the second base station includes a processor 181 and a memory 183 connected to the processor 181 via a bus interface 182. The memory 183 is configured to store programs and data used by the processor 181 when executing operations, and when the processor 181 invokes and executes the programs and data stored in the memory 183, the processor 181 executes the following steps: receiving an access message sent by a User Equipment (UE) and used for requesting establishment of the auxiliary signaling link directed to the second base station, wherein the access message carries a signaling link identifier between the UE and a first base station, and the first base station is a master base station of the UE; in case that the second base station agrees to establish the auxiliary signaling link, allocating corresponding radio resources to the auxiliary signaling link, and sending, to the first base station, a request message for requesting establishment of the auxiliary signaling link according to the signaling link identifier, wherein the request message carries an identifier of a signaling bearer of the auxiliary signaling link and radio resource configuration information of the auxiliary signaling link; receiving a response message returned by the first base station in response to the request message; and sending the radio resource configuration information of the auxiliary signaling link to the UE, such that the UE may establish the auxiliary signaling link directed to the second base station.

As shown in Fig. 19, the present disclosure further provides another device for establishing an auxiliary signaling link, and the device may be applied to a User Equipment (UE). As shown in Fig. 19, the device includes a sending unit 191, a receiving unit 192, and an establishment unit 193.

The sending unit 191 is configured for, in case that a new auxiliary signaling link needs to be established, determining a second base station corresponding the auxiliary signaling link, and sending, to the second base station, an access message for requesting establishment of the auxiliary signaling link directed to the second base station, wherein the access message carries a signaling link identifier between the UE and a first base station, and the first base station is a master base station of the UE.

The receiving unit 192 is configured for receiving radio resource configuration information of the auxiliary signaling link sent by the second base station after the second base station allocates corresponding radio resources to the auxiliary signaling link, wherein the radio resource configuration information of the auxiliary signaling link is sent after the second base station sent a request message for requesting establishment of the auxiliary signaling link to the first base station and received a response message returned by the first base station.

The establishment unit 193 is configured for configuring a layer-2 link parameter according to the radio resource configuration information of the auxiliary signaling link and initiating a node synchronization process to the second base station to establish the auxiliary signaling link directed to the second base station.

Herein, the sending unit 191 is further configured to determine whether the auxiliary signaling link needs to be newly established according to a measurement report of radio access networks and/or received radio resource management (RRM) information.

In some embodiments, a User Equipment (UE) is further provided. As shown in Fig. 20, the UE includes: a processor 201; and a memory 203 connected to the processor 201 via a bus interface 202. The memory 203 is configured to store programs and data used by the processor 201 when executing operations, and when the processor 201 invokes and executes the programs and data stored in the memory 203, the processor 201 executes the following steps: in case that a new auxiliary signaling link needs to be established, determining a second base station corresponding the auxiliary signaling link, and sending, to the second base station, an access message for requesting establishment of the auxiliary signaling link directed to the second base station, wherein the access message carries a signaling link identifier between the UE and a first base station, and the first base station is a master base station of the UE; receiving radio resource configuration information of the auxiliary signaling link sent by the second base station after the second base station allocates corresponding radio resources to the auxiliary signaling link, wherein the radio resource configuration information of the auxiliary signaling link is sent after the second base station sent a request message to the first base station for requesting establishment of the auxiliary signaling link and received a response message returned by the first base station; and establishing the auxiliary signaling link directed to the second base station according to the radio resource configuration information of the auxiliary signaling link.

As shown in Fig. 21, the present disclosure further provides a device for establishing an auxiliary signaling link, and the device may be applied to a first base station. As shown in Fig. 21, the device includes a receiving unit 211 and a sending unit 212.

The receiving unit 211 is configured for receiving a request message sent by the second base station and used for requesting establishment an auxiliary signaling link directed to the second base station, wherein the first base station is a master base station of the UE, the request message is sent after the second base station allocates corresponding radio resources to the auxiliary signaling link, and carries an identifier of a signaling bearer of the auxiliary signaling link and radio resource configuration information of the auxiliary signaling link. The request message may further carry information such as a transport layer address of the second base station corresponding to the auxiliary signaling bearer.

The sending unit 212 is configured for updating radio configuration information of the UE saved in the first base station according to the request message, and sending a response message to the second base station. The response message may further carry a transport layer address of the first base station corresponding to the auxiliary signaling bearer.

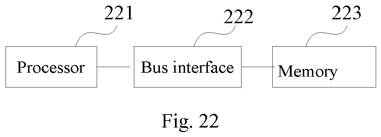

In some embodiments, a first base station is further provided. As shown in Fig. 22, the first base station includes: a processor 221; and a memory 223 connected to the processor 221 via a bus interface 222. The memory 223 is configured to store programs and data used by the processor 221 when executing operations, and when the processor 221 invokes and executes the programs and data stored in the memory 223, the processor 221 executes the following steps: receiving a request message sent by a second base station and used for requesting establishment of an auxiliary signaling link directed to the second base station for a User Equipment (UE), wherein the first base station is a master base station of the UE, and the request message is sent after the second base station allocates corresponding radio resources to the auxiliary signaling link, and carries an identifier of a signaling bearer of the auxiliary signaling link and radio resource configuration information of the auxiliary signaling link; and sending a response message to the second base station according to the request message.

From the above, the embodiments of the present disclosure allow the UE to establish an auxiliary the signaling link on the plurality of radio access systems. Thus, for a signaling bearer having the auxiliary signaling link, a RRC signaling message thereon is allowed to be transmitted to the UE on a plurality of links such as master/secondary links simultaneously, and a reliability of signaling transmission may be improved, and a success rate of handing-over control based on the signaling subsequently may be increased.

The above are merely optional embodiments of the present disclosure. It should be noted that, a person skilled in the art may make various improvements and modifications without departing from the principles of the present disclosure, and these improvements and modifications shall also fall within the scope of the present disclosure.

## Claims

1. A method for establishing an auxiliary signaling link, comprising:
determining, by a first base station, whether an auxiliary signaling link directed to a second base station needs to be established for a user equipment or not, wherein the first base station is a master base station of the user equipment;
in case that the auxiliary signaling link needs to be established, sending, by the first base station, a request message for requesting establishment of the auxiliary signaling link to the second base station, wherein the request message carries a signaling bearing identifier of the auxiliary signaling link requested to be established;
receiving, by the first base station, a response message returned by the second base station in response to the request message, wherein the response message carries radio resource configuration information of the auxiliary signaling link; and
sending, by the first base station, the radio resource configuration information of the auxiliary signaling link to the user equipment, such that the user equipment establishes the auxiliary signaling link directed to the second base station.

2. The method according to claim 1, wherein determining, by the first base station, whether the auxiliary signaling link directed to the second base station needs to be established for the user equipment or not, comprises:
determining, by the first base station, whether the auxiliary signaling link needs to be established for the user equipment or not, according to a received measurement report of the user equipment and/or radio resource management information, and in case that the auxiliary signaling link needs to be established, selecting the second base station corresponding to the auxiliary signaling link.

3. The method according to claim 1, wherein, sending, by the first base station, the radio resource configuration information of the auxiliary signaling link to the user equipment, comprises:
sending, by the first base station, the radio resource configuration information of the auxiliary signaling link to the user equipment by carrying the radio resource configuration information of the auxiliary signaling link in a radio resource control RRC reconfiguration signaling.

4. A method for establishing an auxiliary signaling link, comprising:
receiving, by a second base station, a request message sent by a first base station and used for requesting establishment of the auxiliary signaling link directed to the second base station for a user equipment, wherein the first base station is a master base station of the user equipment, and the request message carries an identifier of a signaling bearer of the auxiliary signaling link requested to be established;
in case that second base station agrees to establish the auxiliary signaling link, allocating, by the second base station, corresponding radio resources to the auxiliary signaling link, and returning a response message carrying radio resource configuration information of the auxiliary signaling link to the first base station; and
establishing, by the second base station, the auxiliary signaling link in response to a synchronization process of radio parameter configuration initiated by the user equipment, wherein the synchronization process is initiated by the user equipment according to the radio resource configuration information of the auxiliary signaling link forwarded by the first base station.

5. A method for establishing an auxiliary signaling link, comprising:
receiving, by a user equipment, radio resource configuration information of an auxiliary signaling link directed to a second base station sent by a first base station, wherein the first base station is a master base station of the user equipment, and the second base station is a base station selected by the first base station in case that the auxiliary signaling link needs to be established for the user equipment; and
initiating, by the user equipment, a node synchronization process to the second base station according to the radio resource configuration information of the auxiliary signaling link to establish the auxiliary signaling link directed to the second base station.

6. The method according to claim 5, wherein the second base station and the first base station belong to different radio access systems, respectively.

7. A device for establishing an auxiliary signaling link, the device being applied to a first base station and comprising:
a determination unit, configured for determining whether the auxiliary signaling link directed to a second base station needs to be established for a user equipment or not, wherein the first base station is a master base station of the user equipment;
a first sending unit, configured for, in case that the auxiliary signaling link needs to be established, sending a request message for requesting establishment of the auxiliary signaling link to the second base station, wherein the request message carries an identifier of a signaling carrier of the auxiliary signaling link requested to be established;
a first receiving unit, configured for receiving a response message returned by the second base station in response to the request message, wherein the response message carries radio resource configuration information of the auxiliary signaling link; and
a second sending unit, configured for sending the radio resource configuration information of the auxiliary signaling link to the user equipment, such that the user equipment establishes the auxiliary signaling link directed to the second base station.

8. The device according to claim 7, wherein, the determination unit is further configured for:
determining whether the auxiliary signaling link needs to be established for the user equipment or not according to a received measurement report of the user equipment and/or radio resource management information, and
in case that the auxiliary signaling link needs to be established, selecting the second base station corresponding to the auxiliary signaling link.

9. The device according to claim 7, wherein, the second sending unit is specifically configured for:
sending the radio resource configuration information of the auxiliary signaling link to the user equipment by carrying the radio resource configuration information of the auxiliary signaling link in a radio resource control RRC reconfiguration signaling.

10. A first base station, comprising:
a processor; and
a memory connected to the processor via a bus interface, and configured to store programs and data used by the processor when executing operations, wherein when the processor invokes and executes the programs and data stored in the memory, the processor executes:
determining whether an auxiliary signaling link directed to a second base station needs to be established for a user equipment or not, wherein the first base station is a master base station of the user equipment;
in case that the auxiliary signaling link needs to be established, sending, to the second base station, a request message for requesting establishment of the auxiliary signaling link, wherein the request message carries an identifier of a signaling bearer of the auxiliary signaling link requested to be established;
receiving a response message returned by the second base station in response to the request message, wherein the response message carries radio resource configuration information of the auxiliary signaling link; and
sending the radio resource configuration information of the auxiliary signaling link to the user equipment, such that the user equipment establishes the auxiliary signaling link directed to the second base station.

11. A device for establishing an auxiliary signaling link, the device being applied to a second base station and comprising:
a receiving unit, configured for receiving a request message sent by a first base station and used for requesting establishment of the auxiliary signaling link directed to the second base station for a user equipment, wherein the first base station is a master base station of the user equipment, and the request message carries an identifier of a signaling bearer of the auxiliary signaling link requested to be established;
a sending unit, configured for, in case that the second base station agrees to establish the auxiliary signaling link, allocating corresponding radio resources to the auxiliary signaling link, and returning a response message carrying radio resource configuration information of the auxiliary signaling link to the first base station; and
a synchronization unit, configured for establishing the auxiliary signaling link in response to a synchronization process of radio parameter configuration initiated by the user equipment, wherein the synchronization process is initiated by the user equipment according to the radio resource configuration information of the auxiliary signaling link forwarded by the first base station.

12. A second base station, comprising:
a processor; and
a memory connected to the processor via a bus interface and configured to store programs and data used by the processor when executing operations, wherein when the processor invokes and executes the programs and data stored in the memory, the processor executes:
receiving a request message sent by a first base station and used for requesting establishment of an auxiliary signaling link directed to a second base station for a user equipment, wherein the first base station is a master base station of the user equipment, and the request message carries an identifier of a signaling bearer of the auxiliary signaling link requested to be established;
in case that the second base station agrees to establish the auxiliary signaling link, allocating corresponding radio resources to the auxiliary signaling link, and returning a response message carrying radio resource configuration information of the auxiliary signaling link to the first base station; and
establishing the auxiliary signaling link in response to a synchronization process of radio parameter configuration initiated by the user equipment, wherein the synchronization process is initiated by the user equipment according to the radio resource configuration information of the auxiliary signaling link forwarded by the first base station.

13. A device for establishing an auxiliary signaling link, the device being applied to a user equipment and comprising:
a receiving unit, configured for receiving radio resource configuration information of an auxiliary signaling link directed to a second base station sent by a first base station, wherein the first base station is a master base station of the user equipment, and the second base station is a base station selected by the first base station in case that the auxiliary signaling link needs to be established for the user equipment; and
a synchronization unit, configured for initiating a node synchronization process to the second base station according to the radio resource configuration information of the auxiliary signaling link to establish the auxiliary signaling link directed to the second base station.

14. A user equipment, comprising:
a processor; and
a memory connected to the processor via a bus interface and configured to store programs and data used by the processor when executing operations, wherein when the processor invokes and executes the programs and data stored in the memory, the processor executes:
receiving radio resource configuration information of an auxiliary signaling link directed to a second base station sent by a first base station, wherein the first base station is a master base station of the user equipment, and the second base station is a base station selected by the first base station in case that the auxiliary signaling link needs to be established for the user equipment; and
initiating a node synchronization process to the second base station according to the radio resource configuration information of the auxiliary signaling link to establish the auxiliary signaling link directed to the second base station.

15. A method for establishing an auxiliary signaling link, comprising:
receiving, by a second base station, an access message for requesting establishment of the auxiliary signaling link directed to the second base station sent by a user equipment, wherein the access message carries a signaling link identifier between the user equipment and a first base station, and the first base station is a master base station of the user equipment;
in case that the second base station agrees to establish the auxiliary signaling link, allocating, by the second base station, corresponding radio resources to the auxiliary signaling link, and sending, to the first base station, a request message for requesting establishment of the auxiliary signaling link according to the signaling link identifier, wherein the request message carries an identifier of a signaling bearer of the auxiliary signaling link and radio resource configuration information of the auxiliary signaling link;
receiving, by the second base station, a response message returned by the first base station in response to the request message; and
sending, by the second base station, the radio resource configuration information of the auxiliary signaling link to the user equipment, such that the user equipment establishes the auxiliary signaling link directed to the second base station.

16. A method for establishing an auxiliary signaling link, comprising:
in case that a new auxiliary signaling link needs to be established, determining, by a user equipment, a second base station corresponding to the auxiliary signaling link, and sending, to the second base station, an access message for requesting establishment of the auxiliary signaling link directed to the second base station, wherein the access message carries a signaling link identifier between the user equipment and a first base station, and the first base station is a master base station of the user equipment;
receiving, by the user equipment, radio resource configuration information of the auxiliary signaling link sent by the second base station after the second bae station allocates corresponding radio resources to the auxiliary signaling link, wherein the radio resource configuration information of the auxiliary signaling link is sent after the second base station sent, to the first base station, a request message for requesting establishment of the auxiliary signaling link and received a response message returned by the first base station; and
configuring, by the user equipment, a layer-2 link parameter according to the radio resource configuration information of the auxiliary signaling link and initiating a node synchronization process to the second base station to establish the auxiliary signaling link directed to the second base station.

17. The method according to claim 16, wherein, the user equipment further determines whether the new auxiliary signaling link needs to be established or not according to a measurement report of radio access networks and/or received radio resource management information.

18. A method for establishing an auxiliary signaling link, comprising:
receiving, by a first base station, a request message sent by a second base station and used for requesting establishment of the auxiliary signaling link directed to the second base station for a user equipment, wherein the first base station is a master base station of the user equipment, the request message is sent by the second base station after the second base station allocates corresponding radio resources to the auxiliary signaling link, and carries an identifier of a signaling bearer of the auxiliary signaling link and radio resource configuration information of the auxiliary signaling link; and
updating, by the first base station, radio configuration information of the user equipment saved in the first base station according to the request message, and sending a response message to the second base station.

19. The method according to any one of claims 15 to 18, wherein the second base station and the first base station belong to different radio access systems, respectively.

20. A device for establishing an auxiliary signaling link, the device being applied to a second base station and comprising:
a first receiving unit, configured for receiving an access message sent by a user equipment and used for requesting establishment of the auxiliary signaling link directed to the second base station, wherein the access message carries a signaling link identifier between the user equipment and a first base station, and the first base station is a master base station of the user equipment;
a first sending unit, configured for, in case that the second base station agrees to establish the auxiliary signaling link, allocating corresponding radio resources to the auxiliary signaling link, and sending, to the first base station, a request message for requesting establishment of the auxiliary signaling link according to the signaling link identifier, wherein the request message carries an identifier of a signaling bearer of the auxiliary signaling link and radio resource configuration information of the auxiliary signaling link;
a second receiving unit, configured for receiving a response message returned by the first base station in response to the request message; and
a second sending unit, configured for sending radio resource configuration information of the auxiliary signaling link to the user equipment, such that the user equipment establishes the auxiliary signaling link directed to the second base station.

21. A second base station, comprising:
a processor; and
a memory connected to the processor via a bus interface and configured to store programs and data used by the processor when the processor executes operations, wherein when the processor invokes and executes the programs and data stored in the memory, the processor executes:
receiving an access message for requesting establishment of an auxiliary signaling link directed to the second base station sent by a user equipment, wherein the access message carries a signaling link identifier between the user equipment and a first base station, and the first base station is a master base station of the user equipment;
in case that the second base station agrees to establish the auxiliary signaling link, allocating corresponding radio resources to the auxiliary signaling link, and sending, to the first base station, a request message for requesting establishment of the auxiliary signaling link according to the signaling link identifier, wherein the request message carries an identifier of a signaling bearer of the auxiliary signaling link and radio resource configuration information of the auxiliary signaling link;
receiving a response message returned by the first base station in response to the request message; and
sending the radio resource configuration information of the auxiliary signaling link to the user equipment, such that the user equipment establishes the auxiliary signaling link directed to the second base station.

22. A device for establishing an auxiliary signaling link, the device being applied to a user equipment and comprising:
a sending unit, configured for, in case that a new auxiliary signaling link needs to be established, determining a second base station corresponding to the auxiliary signaling link, and sending, to the second base station, an access message for requesting establishment of the auxiliary signaling link directed to the second base station, wherein the access message carries a signaling link identifier between the user equipment and a first base station, and the first base station is a master base station of the user equipment;
a receiving unit, configured for receiving radio resource configuration information of the auxiliary signaling link sent by the second base station after the second base station allocates corresponding radio resources to the auxiliary signaling link, wherein the radio resource configuration information of the auxiliary signaling link is sent after the second base station sent, to the first base station, a request message for requesting establishment of the auxiliary signaling link and received a response message returned by the first base station; and
an establishing unit, configured for configuring a layer-2 link parameter according to the radio resource configuration information of the auxiliary signaling link and initiating a node synchronization process to the second base station to establish the auxiliary signaling link directed to the second base station.

23. The device according to claim 22, wherein, the sending unit is further configured for:
determining whether the new auxiliary signaling link needs to be established or not according to a measurement report of radio access networks and/or received radio resource management information.

24. A user equipment, comprising:
a processor; and
a memory connected to the processor via a bus interface and configured to store programs and data used by the processor when the processor executes operations, wherein when the processor invokes and executes the programs and data stored in the memory, the processor executes:
in case that a new auxiliary signaling link needs to be established, determining, a second base station corresponding to the auxiliary signaling link, and sending, to the second base station, an access message for requesting establishment of the auxiliary signaling link directed to the second base station, wherein the access message carries a signaling link identifier between the user equipment and a first base station, and the first base station is a master base station of the user equipment;
receiving radio resource configuration information of the auxiliary signaling link sent by the second base station after the second bae station allocates corresponding radio resources to the auxiliary signaling link, wherein the radio resource configuration information of the auxiliary signaling link is sent after the second base station sent, to the first base station, a request message for requesting establishment of the auxiliary signaling link and received a response message returned by the first base station; and
establishing the auxiliary signaling link directed to the second base station, according to the radio resource configuration information of the auxiliary signaling link.

25. A device for establishing an auxiliary signaling link, the device being applied to a first base station and comprising:
a receiving unit, configured for receiving a request message sent by a second base station and used for requesting establishment of the auxiliary signaling link directed to the second base station for a user equipment, wherein the first base station is a master base station of the user equipment, the request message is sent by the second base station after the second base station allocates corresponding radio resources to the auxiliary signaling link, and carries an identifier of a signaling bearer of the auxiliary signaling link and radio resource configuration information of the auxiliary signaling link; and
a sending unit, configured for updating radio configuration information of the user equipment saved in the first base station, according to the request message, and sending a response message to the second base station.

26. A first base station, comprising:
a processor; and
a memory connected to the processor via a bus interface and configured to store programs and data used by the processor when the processor executes operations, wherein when the processor invokes and executes the programs and data stored in the memory, the processor executes:
receiving a request message sent by a second base station and used for requesting establishment of an auxiliary signaling link directed to the second base station for a user equipment, wherein the first base station is a master base station of the user equipment, the request message is sent by the second base station after the second base station allocates corresponding radio resources to the auxiliary signaling link, and carries an identifier of a signaling bearer of the auxiliary signaling link and radio resource configuration information of the auxiliary signaling link; and
sending a response message to the second base station according to the request message.
